# EUROPÄISCHE PATENTSCHRIFT

(11) **EP 1 175 576 B1**
(45) Veröffentlichungstag und Bekanntmachung des Hinweises auf die Patenterteilung: **09.07.2003**
(21) Anmeldenummer: 00906139.1
(22) Anmeldetag: 09.03.2000
(51) Int. Cl.: F16K 31/34, F16K 21/18

(54) **EINLAUFGARNITUR FÜR EINEN SPÜLKASTEN**
INFLOW FITTING FOR A FLUSHING BOX
GARNITURE D'ARRIVEE D'EAU POUR UN RESERVOIR DE CHASSE

(30) Priorität: 11.05.1999 CH 89199
(43) Veröffentlichungstag der Anmeldung: 30.01.2002
(73) Patentinhaber: GEBERIT TECHNIK AG, 8645 Jona (CH)
(72) Erfinder: WEY, Paul, CH-8733 Eschenbach (CH); OHMANN, Eckart, CH-8634 Hombrechtikon (CH)
(74) Vertreter: Groner, Manfred
(86) Internationale Anmeldenummer: CH0000139
(87) Internationale Veröffentlichungsnummer: WO00068604

(56) Entgegenhaltungen:
- EP-A- 0 084 082
- DE-A- 2 241 763
- DE-U- 7 608 115
- FR-A- 2 339 797
- US-A- 3 763 881

## Beschreibung

Die Erfindung betrifft eine Einlaufgarnitur für einen Spülkasten, mit einem Gehäuse, das einen Wasserführungskanal aufweist, der von einem Einlass zu einem schwimmergesteuerten Membranventil führt, das in der Membran einen Durchgang für den Druckausgleich zwischen einem Ringkanal vor der Membran und einem Raum hinter der Membran aufweist.

Einlaufgarnituren dieser Art sind bei WC-Spülkästen seit langem bekannt. Die Einlaufgarnitur ist mit einer Wasserversörgungsleitung verbunden und dient dazu, den Spülkasten nach einer Spülung jeweils möglichst schnell und geräuscharm wieder aufzufüllen. Nach der Auslösung eines Spülvorganges wird das Membranventil durch den fallenden Schwimmer geöffnet und hiernach strömt Wasser in den Spülkasten. Mit steigendem Wasserniveau im Spülkasten wird durch den steigenden Schwimmer das Membranventil wieder geschlossen. Solche Membranventile arbeiten in bekannter Weise nach dem Servoprinzip. Für den Druckausgleich zwischen einem Ringraum vor der Ventilmembran und einem Raum nach dieser Membran weist die Membran einen vergleichsweise kleinen Durchgang auf. Der Ventilkörper kann dadurch mit vergleichsweise kleinen Druckunterschieden gesteuert werden.

Die DE 22 41 763 zeigt eine gattungsgemässe Einlaufgarnitur. Bei dieser besteht nun die Schwierigkeit, dass der genannte Durchgang in der Membran bezüglich eines Kanals 18 der Wasserführung genau ausgerichtet werden muss. Der Durchgang in der Membran muss in der Linie des Kanals 18 liegen. Liegt der Durchgang ausserhalb dieses Kanals, so arbeitet das Membranventil nicht im gesamten Druckbereich störungsfrei. Bei der Montage muss somit auf eine exakte Positionierung der Membran geachtet werden, was die Montage erschwert.

Der Erfindung liegt die Aufgabe zugrunde, eine Einlaufgarnitur der genannten Gattung zu schaffen, die einfacher montierbar ist und eine Fehlfunktion aufgrund einer ungenau montierten Membran vermeidet.

Die Aufgabe ist bei einer gattungsgemässen Einlaufgarnitur dadurch gelöst, dass der Wasserführungskänal im wesentlichen tangential in den Ringkanal mündet, derart, dass in diesem bei offenem Ventil eine Strömung in Umfangsrichtung dieses Ringkanals gebildet wird. Bei der erfindungsgemässen Einlaufgarnitur wird durch das tangentiale Einströmen des Wassers in den Ringkanal in diesem eine gleichmässige Verwirbelung im Ringkanal und damit vor der Membran geschaffen. Es hat sich gezeigt, dass aufgrund dieser Verwirbelung. die Position des Durchganges der Membran im Ringkanal für die Arbeitsweise des Membranventils nicht mehr ausschlaggebend ist. Das Membranventil arbeitet in jeder Position des Durchganges in gleich grosser Zuverlässigkeit. Bei der erfindungsgemässen Einlaufgarnitur muss darum nicht auf die Position des Durchganges im Ringkanal geachtet werden. Eine Fehlfunktion aufgrund einer nicht exakt montierten Membran wird damit vermieden. Die Montage wird entsprechend einfacher und schneller.

Die tangentiale Einströmung in den Ringkanal kann dann besonders einfach realisiert werden, wenn das Gehäuse einen Einsatz mit einem Durchgang aufweist, welcher zur Längsachse des Gehäuses geneigt ist. Nach einer Weiterbildung der Erfindung weist dieser Einsatz eine Prallplatte auf, die in Strömungsrichtung nach einer Einlassdüse angeordnet ist. Durch die Prallplatte wird die Strömungsgeschwindigkeit des Wassers im Wasserführungskanal wesentlich vermindert. Ein nachgeschalteter Ringkanal vermindert diese Strömungsgeschwindigkeit noch weiter. Im genannten Durchgang des Einsatzes wird dann die Strömungsgeschwindigkeit wesentlich erhöht und das Wasser strömt dann beispielsweise mit etwa zehn Meter pro Sekunden in den genannten Ringraum und erzeugt in diesem einen Drall bzw. eine Verwirbelung in Umfangsrichtung. In diesem Ringraum wird dann die Strömungsgeschwindigkeit nochmals um ein Mehrfaches gesenkt.

Weitere vorteilhafte Merkmale ergeben sich aus der nachfolgenden Beschreibung sowie der Zeichnung.

Ein Ausführungsbeispiel der Erfindung wird nachfolgend anhand der Zeichnung näher erläutet. Es zeigen:
- Figur 1: schematisch eine Ansicht einer erfindungsgemässen Einlaufgarnitur,
- Figur 2: ein Längsschnitt durch die Einlaufgarnitur,
- Figur 3: ein Längsschnitt gemäss Figur.2, wobei jedoch das Ventil offen ist,
- Figur 4: der Verlauf der Strömungsgeschwindigkeit in der Einlaufgarnitur bei geöffnetem Ventil,
- Figur 5: schematisch eine räumliche Ansicht eines Gehäuse-einsatzes,
- Figur 6: eine Ansicht des Einsatzes gemäss Figur 5,
- Figur 7: ein Schnitt durch den Einsatz,
- Figur 8: eine weitere Ansicht des Einsatzes, und
- Figur 9: eine Ansicht des Gehäuses.

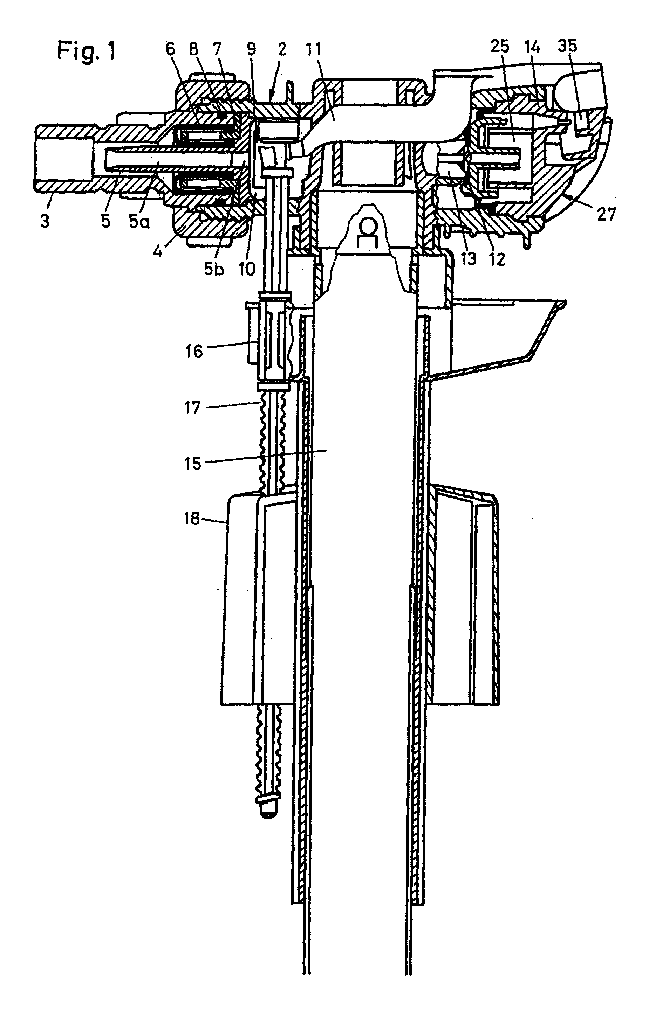

Die in Figur 1 gezeigte Einlaufgarnitur wird in einem hier nicht gezeigten Spülkasten befestigt und weist ein Gehäuse 2 auf, an dem mittels einer Mutter 4 ein Anschlussnippel 3 angebracht ist. Am Nippel 3 ist die Einlaufgarnitur 2 am Spülkasten befestigt und an diesem wird auch die hier nicht gezeigte Wasserversorgungsleitung angeschlossen. In den Nippel 3 ist ein Düsenkörper 5 eingesetzt, der mittels einer Dichtungsmanschette 6 gegenüber dem Nippel abgedichtet ist. Ein Klemmring 7 ist zwischen dem Düsenkörper 5 und dem Nippel angeordnet und dieser trägt die Dichtungsmanschette 6, Der Düsenkörper 5 weist eine Durchgangsbohrung 5a auf, die an der Mündung 5b stufenförmig etwas erweitert ist.

Das durch den Düsenkanal 5a einströmende Wasser gelangt über einen Wasserführungskanal 10 zu einem Membranventil 27 das in Figur 1 in geschlossener Stellung gezeigt ist. Bei geöffnetem Ventil strömt das Wasser in ein Einlaufrohr 15 und von diesem in den Spülkasten. Am Einlaufrohr 15 ist ein Schwimmer 18 gelagert, der über eine Stange 17 mit einem am Gehäuse 2 schwenkbar gelagerten Hebel 11 verbunden ist. Sinkt in der in Figur 1 gezeigten Stellung der Schwimmer 18 nach unten, so wird der Hebel 11 verschwenkt und dadurch wird eine Auslassbohrung 35 freigegeben und aufgrund eines Druckabfalls in einer Kammer 25 wird das Membranventil 27 geöffnet. Der Aufbau und die Wirkungsweise eines solchen Membranventiles 27 ist dem Fachmann grundsätzlich bekannt.

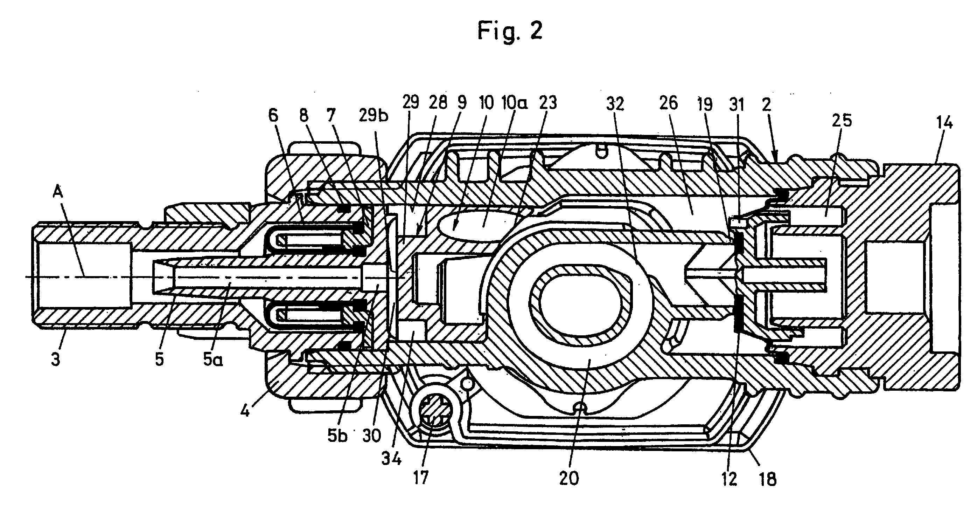

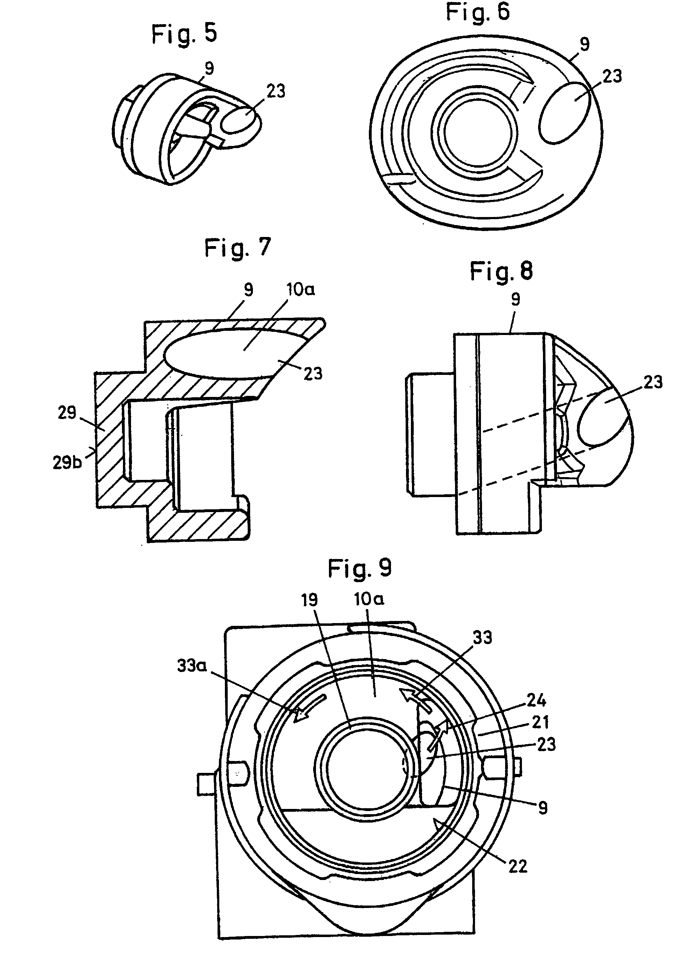

Wie die Figur 2 zeigt, ist in einer Bohrung 28 des Gehäuses 2 ein Einsatz 9 gelagert, der eine Prallplatte 29 mit einer ebenen Aufprallfläche 29b (Figur 7) aufweist. Die Aufprallfläche 29b erstreckt sich quer zur Längsrichtung A des Gehäuses 2. Zwischen der Mündung 5b und der Aufprallfläche 29b befindet sich ein tellerförmiger Strömungsraum 30 der an seinem Umfang in einen ringförmigen Kanal 34 mündet. Dieser Kanal 34 ist mit einem Durchgang 10a des Einsatzes 9 verbunden, der an einer Mündung 23 in einen Ringkanal 26 mündet. Der Durchgang 10a verläuft gemäss Figur 8 geneigt zur Längsrichtung A des Gehäuses 2. Die Mündung 23 ist gemäss Figur 9 gegen eine im wesentlichen zylindrische Innenfläche 22 des Gehäuses 2 gerichtet. Die Strömungsrichtung unmittelbar nach der Mündung 23 ist in Figur 9 durch den Pfeil 24 angedeutet. An der Fläche 22 wird das in den Ringkanel 26 einströmende Wasser abgelenkt und strömt etwa in Richtung der Pfeile 33 und 33a in Umfangsrichtung des Ringkanals 26. Diese im wesentlichen tangentiale Strömung erzeugt im Ringraum 26 einen Drall sowie eine Verwirbelung.

Bei geschlossenem Ventil ist der Ringraum 26 mittels einer Membran 12 gegenüber einem Einlaufkanal 20 abgedichtet. Die Membran 12 liegt gemäss Figur 2 an einem Ventilsitz 19 an. Der Anpressdruck wird durch eine Kraftdifferenz zwischen der Ringraumfläche 26 und der Fläche des hinter der Membran 12 angeordneten Raumes 25 aufrecht erhalten. Für den Druckausgleich zwischen diesen beiden Räumen weist die Membran 12 einen vergleichsweise kleinen Durchgang 31 auf. Das Ventil wird in bekannter Weise geöffnet, in dem der Druck im Raum 25 vermindert wird. Das Schliessen des Membranventils 12 erfolgt in bekannter Weise durch einen Druckaufbau im Raum 25. Dazu strömt aus dem Ringraum .26 durch den Durchgang 31. Wasser in den Raum 25. Für die Erfindung ist nun wesentlich, dass die Position des Durchganges 31 im Ringraum 26 für die Funktionsweise nicht erheblich ist. Dazu ist insbesondere der erwähnte Drall bzw. die Verwirbelung im Ringraum 26 wesentlich.

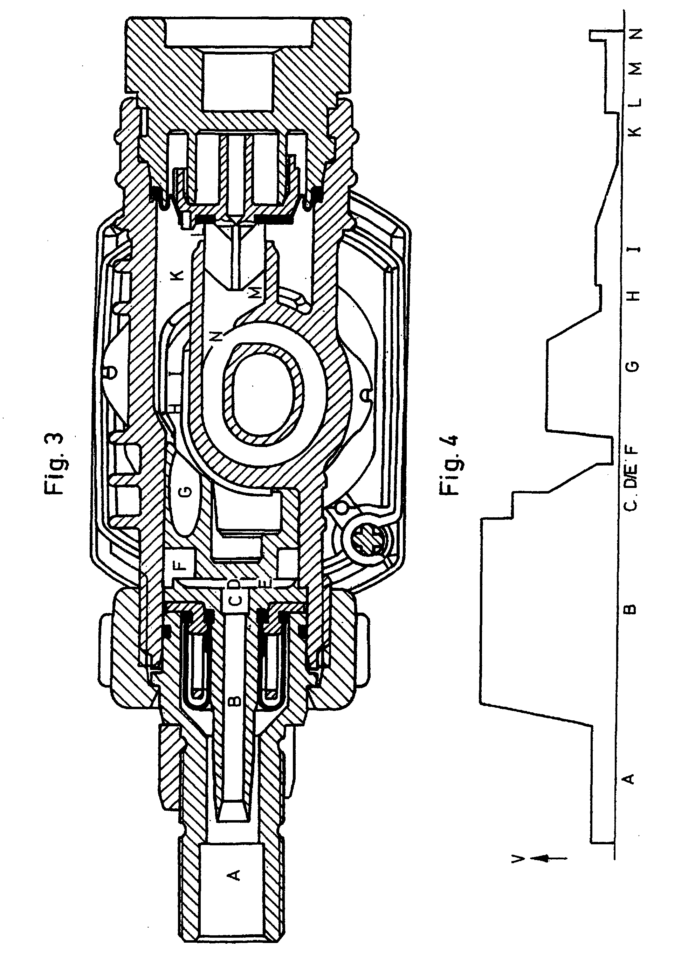

Nachfolgend wird insbesondere anhand der Figuren 3 und 4 der Strömungsverlauf näher erläutert.

Die Figur 4 zeigt die Strömungsgeschwindigkeit im Wasserführungskanal 10 beginnend vom Anfang des Düsenkanals 5a bis zur Mündung 32 in den Einlaufkanal 20. Durch den Düsenkörper 5 wird wie ersichtlich die Strömungsgeschwindigkeit wesentlich erhöht. Im Raum 30 und vor der Aufprallfläche 29b wird die Strömungsgeschwindigkeit stark vermindert und dies nochmals durch den Ringraum 34. Im Durchgang 10a wird dann die Strömungsgeschwindigkeit wieder um ein Mehrfaches erhöht und nach der Mündung 23 wird anschliessend die Strömungsgeschwindigkeit durch den Ringraum 26 stark erniedrigt. Das Wasser strömt somit mit vergleichsweiser hoher Geschwindigkeit in den Ringraum 26. Entsprechend wird im Ringraum 26 eine vergleichsweise hohe Verwirbelung bzw. ein hoher Drall in Umfangsrichtung des Ringraumes 26 erreicht. Vor der Membran 12 herrscht eine vergleichsweise niedrige Strömungsgeschwindigkeit, die nach dem Ventilsitz 19 etwas erhöht wird. Nach der Prallplatte 29 bis zum Ventilsitz 19 ist die Strömungsgeschwindigkeit gegenüber derjenigen im Düsenkörper 5 wesentlich erniedrigt. Dies hat den wesentlichen Vorteil, dass das Gehäuse 2 weniger robust als bisher und mit vergleichsweise dünnen Wandungen gebaut werden kann. Wesentlich ist auch die damit ermöglichte Geräuschminderung.

## Patentansprüche

1. Einlaufgarnitur für einen Spülkasten, mit einem Gehäuse (2), das einen Wasserführungskanal (10) aufweist, der von einem Einlass (5) zu einem schwimmergesteuerten Membranventil (27) führt, das in der Membran (12) einen Durchgang (31) für den Druckausgleich zwischen einem Ringkanal (26) vor der Membran (12) und einem Raum (25) hinter der Membran (12) aufweist, **dadurch gekennzeichnet, dass** der Wasserführungskanal (10) im wesentlichen tangential in den Ringkanal (26) mündet, derart, dass in diesem bei offenem Membranventil (27) eine Strömung in Umfangsrichtung dieses Ringkanals (26) gebildet wird.

2. Einlaufgarnitur nach Anspruch 1, **dadurch gekennzeichnet, dass** der Wasserführungskanal (10) eine Mündung (23) aufweist, welche in den genannten Ringkanal (26) mündet.

3. Einlaufgarnitur nach Anspruch 1 oder 2, **dadurch gekennzeichnet, dass** das Wasser durch eine Einlassdüse (5) in den Wasserführungskanal (10) einströmt und dass in Strömungsrichtung gesehen nach einer Mündung (5b) der Einlassdüse (5) ein Umlenkorgan (9) angeordnet ist, welches das einströmende Wasser umlenkt und die Strömungsgeschwindigkeit wesentlich vermindert.

4. Einlaufgarnitur nach Anspruch 3, **dadurch gekennzeichnet, dass** das Umlenkorgan (9) eine Umlenkplatte (29) aufweist, die eine Aufprallfläche (29b) besitzt, die im wesentlichen senkrecht zur Längsachse (8) des Gehäuses (2) verläuft.

5. Einlaufgarnitur nach Anspruch 4, **dadurch gekennzeichnet, dass** der Abstand der Aufprallfläche (29) zur Mündung (5b) der Einlassdüse (5) weniger als etwa 10 mm beträgt.

6. Einlaufgarnitur nach einem der Ansprüche 4 bis 5, **dadurch gekennzeichnet, dass** in Strömungsrichtung gesehen nach der Aufprallfläche (29b) ein Ringraum (34) angeordnet ist, in welchem die Strömungsgeschwindigkeit wesentlich vermindert wird.

7. Einlaufgarnitur nach Anspruch 6, **dadurch gekennzeichnet, dass** in Strömungsrichtung gesehen nach dem Ringraum (34) ein zur Längsachse (A) des Gehäuses (2) geneigter Durchgang (10a) angeordnet ist.

8. Einlaufgarnitur nach einem der Ansprüche 3 bis 7, **dadurch gekennzeichnet, dass** das Umlenkorgan (9) im Abstand zur Membran (12) des Membranventiles (27) angeordnet ist.

9. Einlaufgarnitur nach einem der Ansprüche 1 bis 8, **dadurch gekennzeichnet, dass** das Gehäuse (2) einen Einsatzkörper (9) aufweist, der mit einem Durchgang (10a) einen Teil des Wasserführungskanals (10) bildet.

10. Einlaufgarnitur nach Anspruch 9, **dadurch gekennzeichnet, dass** der Einsatzkörper (9) eine Mündung (23) aufweist, die im Abstand zum Menbranventil (27) angeordnet ist.

## Claims

1. Inlet fitting for a WC flushing cistern, with a housing (2) having a water-conducting channel (10) leading from an inlet (5) to a float-controlled membrane valve (27) having in the membrane (12) a passage through (31) for pressure equalisation between an annular channel (26) upstream of the membrane (12) and a space (25) downstream of the membrane (12), **characterized in that** the water-conducting channel (10) opens essentially tangentially into the annular channel (26) in such a way that a flow in a circumferential direction of this annular channel (26) is formed therein when the membrane valve (27) is open.

2. Inlet fitting according to Claim 1, **characterized in that** the water-conducting channel (10) has an orifice (23) that opens into the said annular channel (26).

3. Inlet fitting according to Claim 1 or 2, **characterized in that** the water flows into the water-conducting channel (10) through an inlet nozzle (5) and **in that**, when seen in the direction of flow, there is arranged downstream of an orifice (5b) of the inlet nozzle (5) a deflection element (9) which deflects the inflowing water and considerably reduces the flow velocity.

4. Inlet fitting according to Claim 3, **characterized in that** the deflection element (9) has a deflection plate (29) having an impingement surface (29b) running essentially perpendicular to the longitudinal axis (8) of the housing (2).

5. Inlet fitting according to Claim 4, **characterized in that** the spacing distance between the impingement surface (29) and the orifice (5b) of the inlet nozzle (5) is less than about 10 mm.

6. Inlet fitting according to one of the Claims 4 to 5, **characterized in that**, when seen in the direction of flow, there is situated downstream of the impingement surface (29b) an annular space (34) in which the flow velocity is substantially reduced.

7. Inlet fitting according to Claim 6, **characterized in that**, when seen in the direction of flow, a passageway (10a) inclined relative to the longitudinal axis (A) of the housing (2) is arranged downstream of the annular space (34).

8. Inlet fitting according to one of the Claims 3 to 7, **characterized in that** the deflection element (9) is arranged at a distance from the membrane (12) of the membrane valve (27).

9. Inlet fitting according to one of the Claims 1 to 8, **characterized in that** the housing (2) has an insert body (9) which with a passageway (10a) forms a part of the water-conducting channel (10).

10. Inlet fitting according to Claim 9, **characterized in that** the insert body (9) has an orifice (23) arranged at a distance from the membrane valve (27).

## Revendications

1. Dspositif d'arrivée pour un réservoir de chasse d'eau, comprenant un boîtier (2) qui présente une canalisation d'arrivée d'eau (10) qui mène d'une prise d'eau (5) à un clapet à diaphragme (27) commandée par un flotteur qui présente, dans son diaphragme (12), un passage (31) pour permettre l'équilibrage de la pression entre un canal de ceinture (26) situé en amont du diaphragme (12) et un espace (25) situé en aval du diaphragme (12), **caractérisé en ce que** la canalisation d'arrivée d'eau (10) débouche, essentiellement de manière tangentielle, dans le canal de ceinture (26) de sorte que dans ce dernier, lorsque le clapet à diaphragme (27) est ouvert, un courant se forme dans le sens circonférentiel de ce canal de ceinture (26).

2. Dispositif d'arrivée selon la revendication 1, **caractérisé en ce que** la canalisation d'arrivée d'eau (10) présente une ouverture (23) qui débouche dans le canal de ceinture (26) mentionné.

3. Dispositif d'arrivée selon la revendication 1 ou 2, **caractérisé en ce que** l'eau pénètre dans la canalisation d'arrivée d'eau (10) par l'intermédiaire d'une buse d'admission (5), et **en ce qu'**un organe déflecteur (9), qui dévie la direction de l'eau affluant et qui diminue nettement la vitesse d'écoulement, est disposé, vu dans le sens d'écoulement, en aval d'une ouverture (5b) de la buse d'admission (5).

4. Dispositif d'arrivée selon la revendication 3, **caractérisé en ce que** l'organe déflecteur (9) présente un plateau déflecteur (29) possédant une surface de rebondissement (29b) qui s'étend essentiellement perpendiculairement à l'axe longitudinal (8) du boîtier (2).

5. Dispositif d'arrivée selon la revendication 4, **caractérisé en ce que** la distance entre la surface de rebondissement (29) et l'ouverture (5b) de la buse d'admission (5) est inférieure à environ 10 mm.

6. Dispositif d'arrivée selon l'une quelconque des revendications 4 à 5, **caractérisé en ce qu'**un espace circulaire (34), dans lequel la vitesse d'écoulement est nettement diminuée, est disposé, vu dans le sens d'écoulement, en aval de la surface de rebondissement (29b).

7. Dispositif d'arrivée selon la revendication 6, **caractérisé en ce qu'**un passage (10a), qui est incliné par rapport à l'axe longitudinal (A) du boîtier (2), est disposé, vu dans le sens d'écoulement, en aval de l'espace annulaire (34).

8. Dispositif d'arrivée selon l'une quelconque des revendications 3 à 7, **caractérisé en ce que** l'organe déflecteur (9) est disposé à une certaine distance du diaphragme (12) du clapet à diaphragme (27).

9. Dispositif d'arrivée selon l'une quelconque des revendications 1 à 8, **caractérisé en ce que** le boîtier (2) présente un corps d'insert (9) qui forme, conjointement avec le passage (10a), une partie de la canalisation d'arrivée d'eau (10).

10. Dispositif d'arrivée selon la revendication 9, **caractérisé en ce que** le corps d'insert (9) présente une ouverture (23) qui est disposé à une certaine distance du clapet à diaphragme (27).
